# EUROPÄISCHE PATENTANMELDUNG

(11) **EP 3 267 276 A1**
(43) Veröffentlichungstag der Anmeldung: **10.01.2018**
(21) Anmeldenummer: 17183643.0
(22) Anmeldetag: 06.02.2007
(51) Int. Cl.: G05D 1/02, A63C 19/06

(54) **MARKIERWAGEN UND -VERFAHREN**

(30) Priorität: 09.02.2006 EP 06101449
(62) Teilanmeldung aus: 16155829.1
(71) Anmelder: Beamrider Limited, Malvern, Worcestershire WR14 1AT (GB)
(72) Erfinder: Kipfer, Peter, 9435 Heerbrugg (CH); Betschon, Christian, 9410 Heiden (CH); Walser, Bernd, 9435 Heerbrugg (CH); McGuffie, Iain Peter, Herefordshire HR7 4HD (GB); Nicholls, Jeremy, 3075 Rüfenacht (CH)
(74) Vertreter: Veni Swiss & European Patent Attorneys

(57) **Zusammenfassung**

Markierwagen mit einer Ausbringungseinheit (1c) und einem Auslass für Markiersubstanz zur Erzeugung einer bodengebundenen Markierung (M, M'), insbesondere eines Sportfeldes (SF). Der Markierwagen ist mit einer Pumpeinrichtung zum Transportieren der Markiersubstanz zum Auslass, sowie einer Ausbringungssteuereinheit zur Bereitstellung von Steueranweisungen für die Ausbringungseinheit ausgestattet. Der Auslass ist mittels einer Aktuatorvorrichtung (8) quer zur Fahrtrichtung des Markierwagens verschiebbar, wobei die laterale Position des Auslasses unabhängig von der Führung des Markierwagens steuerbar ist.

## Beschreibung

Die Erfindung betrifft einen Markierwagen mit einer Ausbringungseinheit für Markiersubstanz zum Erzeugen bodengebundener Markierungen, z.B. von Sportfeldern.

Zum Erzeugen bodengebundener Markierungen, wie sie beispielsweise zum Festlegen von Spiel und Sportfeldern Verwendung finden, werden Markiergeräte eingesetzt. Die Markiergeräte weisen einen Auslass für Markiersubstanz auf und sind im Allgemeinen fahrbar als Markierwagen ausgebildet. Vor Beginn der eigentlichen Markiertätigkeit müssen das Feld bzw. die zu markierenden Linien und/oder Flächen definiert abgesteckt werden. Dazu ist beispielsweise bekannt, den Markierbereich mit Seilen aufzuspannen - auch als "stringing out" bezeichnet. Der Bereich wird ausgemessen und die zu markierenden Linien durch Seile gekennzeichnet. Anschliessend führt oder fährt eine Bedienperson den - Markiersubstanz auslassenden - Markierwagen entlang der Seile. Diese Art der Markierung birgt jedoch eine Vielzahl möglicher Fehlerquellen, sodass sich häufig Abweichungen von der gewünschten Markierposition ergeben. So ist bereits die Genauigkeit beim - händischen - Verlegen der Seile naturgemäss begrenzt. Weiters kann beim Abfahren das Seil deplatziert werden. Auch sind die Absteckseile nach dem Markieren mit Markiersubstanz bedeckt und können beim Verschieben, Aufnehmen oder erneuten Auslegen unerwünschte Markierspuren erzeugen. Ausserdem nachteilig bei einem derartigen Markiervorgang ist der grosse Zeit und Arbeitsaufwand.

Eine Verbesserung der Markierarbeiten in Hinblick auf Genauigkeit, Zeitbedarf und Handhabungsfreundlichkeit bietet die Verwendung von optischen Leitstrahlen zur Führung eines Markierwagens.

Aus der DE4013950 ist ein Markierwagen bekannt, der anhand eines Laserstrahls gesteuert wird. Eine Korrektur der Querposition der Ausbringungseinheit erfolgt durch die Lenkung des Wagens relativ zum Laserstrahl. Dies hat die folgenden Nachteile: erstens, dass kurze oder plötzliche Abweichungen der Querposition nicht korrigierbar sind; zweitens, dass jede Korrektur einer seitlichen Bewegung des ganzen Markierwagens, und daher eines erheblichen Gewichts, bedarf; und drittens, dass es schwierig ist, einen bestehenden Markierwagen mit einer solchen Steuerung nachzurüsten.

Ein mobiles System für Markierwagen, welches sich mit dieser Problematik auseinandersetzt, wird beispielsweise in der WO2006/013386 beschrieben. Durch eine Laserdiode und eine Optik wird ein Strahl mit fächerförmiger Geometrie und elliptischem Strahlquerschnitt erzeugt. Dieser Strahl wird zur Festlegung einer Seite eines Sportfeldes emittiert. Der zur Ausbringung der Markiersubstanz verwendete Markierwagen weist einen Detektor für die Laserstrahlung auf, wobei die Position des Markierwagens relativ zum vertikal orientierten Strahl angezeigt wird. Der Benutzer des Wagens kann diesen anhand des Laserfächers als Leitstrahl führen. Abweichungen der seitlichen Position des Auslasses werden mittels eines Aktuators korrigiert, der am Markierwagen montiert ist und mit welchem der Auslass quer zur Fahrtrichtung des Markierwagens verschiebbar ist. Die Anmeldung WO2006/013386 ist am Prioritätsdatum dieses Textes veröffentlicht und steht dem Leser somit zur Verfügung. Dennoch gehört die Anmeldung lediglich im Sinne von Art. 54(3) EPC zum Stand der Technik.

US-Patent US6330503 beschreibt ein Markiergerät in welchem das Markieren wie ein Tintenstrahldrucker erfolgt, und zwar mit einer Rasteranordnung vieler Ausbringungsdüsen. Die Positionierung der Markierung bedarf zweier Positionierungsreferenzen und zweier Positionierungsmechanismen. Die Funktionesweise der Positionierung ist komplex, und das Umschalten zwischen benachbarten Ausbringungsdüsen führt zu Markierungen mit unebenen Rändern.

GB2386969 beschreibt einen Markierwagen zum Erzeugen bodengebundener Markierungen, insbesondere eines Sportfeldes. Die Ausbringung von Markierungen mit solchen Systemen ist im ebenen Gelände gattungsgemäss genau, berücksichtigt jedoch nicht Gelände-Unebenheiten und -unregelmässigkeiten, wie Senken oder im Gras versteckte Hindernisse. So kann es vorkommen, dass trotz entsprechender Detektion des Leitstrahls Abweichungen von der gewünschten Markierposition entstehen.

Die Erfindung sieht einen Markierwagen gemäss Anspruch 1 und ein Verfahren gemäss Anspruch 12 vor, mittels welcher mindestens einige der o.g. Nachteile beseitigt oder vermindert werden sollen.

Eine Ausbringungssteuereinheit wird beschrieben, welche einen Strahlungssensor für elektromagnetische Strahlung umfasst, wobei mittels des Strahlungssensors die Position der Ausbringungseinheit für Markiersubstanz relativ zu einem elektromagnetischen Referenzsignal bzw. relativ zu einer durch das Signal festgelegten Referenzebene erfassbar ist, und welche Ausbringungssteuereinheit weiters Mittel zum Erfassen der Orientierung der Ausbringungseinheit relativ zur Referenzebene umfassen kann. Mittels des Strahlungssensors wird das Referenzsignal empfangen und anhand des empfangenen Signals die Relativposition von Ausbringungseinheit und Referenzsignal bestimmt. Durch das Erfassen der Orientierung relativ zum Signal ist eine weitere mögliche Fehlerquelle in der Markierung von Linien und/oder Flächen erfassbar und - durch entsprechende Massnahmen - eliminierbar. Indem der Strahlungssensor und die Mittel zur Orientierungserfassung in definierter Lagebeziehung zur Ausbringungseinheit stehen, kann aus der Kenntnis der Position des Strahlungssensors zur Referenzebene und der Kenntnis der Orientierung der Orientierungserfassungsmittel relativ zur Referenzebene die relative Lage der Einheit abgeleitet werden. Die Ausbringungssteuereinheit kann anhand der Kenntnis dieser Lage Steueranweisungen für die Ausbringungseinheit - insbesondere zur Lage oder Ausbringungskorrektur - bereitstellen. Eine relativ zum Referenzsignal erfasste Lage kann auch als Lage relativ zur durch das Signal festgelegten Referenzebene dargestellt werden.

Für ein Markiergerät zum Erzeugen von Markierlinien und/oder - flächen, wie einen Markierwagen zum Markieren von Sportfeldern, mit einer solchen Ausbringungssteuereinheit ist somit eine sehr hohe Markiergenauigkeit erreichbar, indem Position und Orientierung der Ausbringungseinheit gegenüber der Referenzebene genau feststellbar und gegebenenfalls kompensierbar sind. Ein Feststellen der Position und Orientierung der Ausbringungseinheit impliziert ein Feststellen von Position und Orientierung eines Auslasses für Markiersubstanz der Ausbringungseinheit und vice versa. Der Auslass ist mit der Ausbringungseinheit definiert verbunden oder in diese integriert, z.B. als Öffnung der Einheit.

Die Referenzebene oder mehrere Referenzebenen bzw. das oder die Referenzsignal/e, werden von einem Referenzstrahlgenerator, insbesondere einer Lasersendeeinheit, bereitgestellt. Der Referenzstrahlgenerator wird dabei vor Beginn des eigentlichen Markiervorgangs definiert positioniert und ausgerichtet, sodass die vom Generator emittierte elektromagnetische Strahlung als - eine oder mehrere Referenzebene/n festlegende - Referenzstrahlung zur Führung des Geräts verfügbar ist. Im Allgemeinen erfolgt die Ausrichtung so, dass die Referenzebene vertikal auf der zu markierende Oberfläche steht.

Ein Markiergerät kann jedes bewegliche, insbesondere fahrbare, Gerät mit einer Ausbringungseinheit für Markiersubstanz darstellen. Insbesondere ist das Markiergerät als Markierwagen ausgebildet, welcher von einer Bedienperson geschoben oder aber extern gesteuert werden kann. Ebenso können ein Sitz und eine Steuereinrichtung für einen Fahrer vorgesehen sein. Vorzugsweise weist das Markiergerät einen Trägerwagen und Räder auf. Mit einem Radsensor, welcher z.B. die Umdrehungen der Räder pro Zeiteinheit und damit die Geschwindigkeit des Gefährts erfasst, kann ein weiterer Parameter bei der Steuerung, insbesondere bei der automatischen Steuerung, des Markiergeräts verwertet werden, was gegebenenfalls einer weiteren Steigerung der Markiergenauigkeit dient.

Das Markiergerät weist ein Reservoir mit Markiersubstanz, sowie eine Verbindungs- und Übertragungseinrichtung zwischen Reservoir und Ausbringungseinheit auf. Derartige gattungsgemässe Markierkomponenten und übliche zum Markieren eingesetzte Elemente werden aber im Weiteren nicht oder nicht im Detail beschrieben.

Die Ausbringungseinheit für Markiersubstanz ist mit einem Auslass für Markiersubstanz, beispielsweise einer Düse, ausgebildet, wobei Auslass und Ausbringungseinheit mittel oder unmittelbar verbunden sein können. Die Markiersubstanz wird, im Allgemeinen mittels einer Pumpeinrichtung und einem Verbindungsschlauch, vom Reservoir zum Auslass transportiert und zum Markieren dort ausgelassen, insbesondere gesprüht. Die Markiersubstanz ist dabei vorzugsweise flüssig, kann aber auch ein Pulver sein bzw. feste Partikel, welche z.B. mittels der Düse zerstäubt werden und auf einer Oberfläche haften. Der Auslass kann weiters eine Verschliesseinrichtung aufweisen.

Die Ausbringungseinheit ist vorzugsweise zum Anbringen am Wagen ausgebildet, insbesondere zum lösbaren Anbringen. Durch eine abnehmbare Ausbringungseinheit wird beispielsweise ein Reinigen derselben erleichtert. Weiters ist die Ausbringungseinheit mittel oder unmittelbar lageverstellbar mit dem Markiergerät verbunden, sodass Position und Orientierung des Auslasses für Markiersubstanz gegenüber dem Markiergerät, z.B. einem Fahrgestell des Geräts, einstellbar sind. Dies kann z.B. mittels einer Aktuatorvorrichtung erreicht werden, welche eine definierte Verschiebung des Auslasses quer zur Fahrtrichtung - gegebenenfalls beidseitig - des Markiergeräts sowie eine definierte Verstellung/Verkippung des Auslasses um eine Längs und Querachse des Geräts ermöglicht, beispielsweise mittels eines Gelenks mit zwei rotatorischen Freiheitsgraden.

Sind der Strahlungssensor zur Positions- und die Mittel zur Orientierungserfassung der Ausbringungssteuereinheit unmittelbar mit der Ausbringungseinheit verbunden, so wird die Anordnung der Ausbringungseinheit am Markiergerät insbesondere nach Kriterien der möglichst zuverlässigen und genauen Signalerfassung sowie Handlichkeit und Kompaktheit der Anordnung gewählt. Im Allgemeinen ist der Strahlungssensor zum Empfang des Referenzsignals vom Auslass versetzt angeordnet, um die Führung des Geräts um eine - das Referenzsignal erzeugende - Sendeeinheit zu erleichtern. Gegebenenfalls sind die verschiedenen Komponenten und das Markiergerät so ausgebildet, dass eine flexible Anordnung am Gerät möglich ist - je nach Gegebenheiten der zu markierenden Umgebung. Ebenso können die Sensoren/Mittel in ihrer Position veränderbar sein. Beispielsweise ist ein Steuerprogramm einsetzbar, welches verschiedene Eingabeparameter berücksichtigt.

Die Lageeinstellung der Ausbringungseinheit erfolgt über die Ausbringungssteuereinheit, welche im Allgemeinen mehrere Komponenten umfasst. Durch entsprechendes Ausbilden, Anordnen und Zusammenschalten der Komponenten kann auch die Möglichkeit eines modulartigesAuf- oder Umrüstens der Ausbringungssteuereinheit vorgesehen werden. Die - im Allgemeinen mehreren - Komponenten stehen mit der Ausbringungseinheit in definierter Lagebeziehung, sodass mittels der Komponenten durchgeführte Positions- und Orientierungsbestimmungen eindeutig mit der Lage der Ausbringungseinheit verknüpfbar sind.

Der Strahlungssensor ist beispielsweise als lineare oder flächige Anordnung photosensitiver Bereiche, z.B. als CCD-Zeile oder CCD-Fläche, ausgebildet. Auf einem solchen sensitiven Bereich ist ein Referenz- oder Leitstrahl einer Sendeeinheit, insbesondere einer Lasersendeeinheit, detektierbar. Der detektierte Strahl ermöglicht das Feststellen der Sensorposition gegenüber dem Strahl und damit auch das Feststellen der Position der Ausbringungseinheit, welcher der Sensor zugeordnet ist. Der Leitstrahl legt dabei eine Referenzebene für den Markierungswagen derart fest, dass bei entsprechender Führung des Wagens an der Referenzebene eine korrekte Markierung entsteht.

Der Strahlungssensor kann prinzipiell als optischer Detektor, wie als Photodetektor, Anordnung von Lasersensoren oder Bildaufnahmegerät, welcher die Möglichkeit des Empfangs des Referenzsignals und Ableitens der Position desselben auf dem Detektor bereitstellt, ausgeführt sein.

Die Ausbringungssteuereinheit umfasst weiters Mittel zum Erfassen der Orientierung der Ausbringungseinheit gegenüber der Referenzebene. Ein Neigungserfassungsmittel kann ein - z.B. auf der Ausbringungseinheit angebrachter - auf der Wirkung der Schwerkraft beruhender ein - oder zweiachsiger Neigungssensor darstellen. Ebenso sind zwei Neigungssensoren einsetzbar. Alternativ ist der Strahlungssensor als die Mittel zum Erfassen der Orientierung ausbildbar, z.B. mit einer räumlichen Anordnung von Sensoren für elektromagnetische Strahlung, insbesondere Lasersensoren. Mit einer räumlichen Anordnung von Sensoren sind Position und Orientierung gegenüber einem empfangenen Referenzsignal feststellbar. Für eine solche Anordnung kann die Referenzebene beispielsweise auch nicht vertikal zur Boden-Markierebene, sondern schief auf diese ausgerichtet werden. Ebenso kann mit polarisierter Laserstrahlung und der Sensoranordnung zugeordnetem Polarisationsfilter gearbeitet werden.

Der Ausbringungssteuereinheit ist im Allgemeinen eine Recheneinheit zugeordnet, mittels welcher die erfassten Lageparameter weiterverarbeitbar und gegebenenfalls ausgebbar sind. Die Recheneinheit kann in die Ausbringungssteuereinheit integriert sein und beispielsweise am oder im Gerät angeordnet sein. Ebenso kann die Recheneinheit als externe Komponente mit den Komponenten der Ausbringungssteuereinheit kommunizieren - z.B. anhand einer Verbindung über Kabel, oder einer kabellosen Verbindung.

Werden mittels der Ausbringungssteuereinheit Lageabweichungen der Ausbringungseinheit festgestellt, ergehen Steueranweisungen - mittel oder unmittelbar - an die Ausbringungseinheit bzw. wird die Ausbringungseinheit der festgestellten Abweichung entsprechend gesteuert. Die Steuerung kann auf unterschiedliche Art und Weise erfolgen. Beispielsweise wird bei einer Lageabweichung das Auslassen der Markiersubstanz gestoppt, die Lage korrigiert und erst dann Markiersubstanz weiter ausgelassen. Alternativ oder zusätzlich kann die Ausbringung der Markiersubstanz - gegebenenfalls zur Korrektur von Abweichungen - geregelt werden, beispielsweise indem Auslassparameter, wie Richtung oder Geschwindigkeit der ausgelassenen Substanz, steuerbar sind. Z.B. kann die Ausbringungssteuerung eine Druckregelung einer Pumpeinrichtung betreffen.

Die Steuerung kann auch derart erfolgen, dass festgestellte Abweichungen ohne Unterbrechung der Markierarbeit fortlaufend durch entsprechende Steuerung der Ausbringungseinheit korrigiert werden, solange bestimmte Grenzwerte nicht überschritten werden. Liegen die Abweichungen ausserhalb eines vorgegebenen Toleranzintervalls, wird der Markiervorgang unterbrochen. Zum Anhalten des Markiervorgangs, d.h. des Austritts der Markiersubstanz, kann mittels der Ausbringungssteuereinheit - bzw. gegebenenfalls auch manuell - eine entsprechende Stoppfunktion aktiviert werden. Bei Aktivierung wird der Transport der Markiersubstanz zum Auslass unterbrochen, z.B. wird die Pumpeinrichtung ausgeschaltet und/oder der Auslass verschlossen bzw. die Verbindung zum Reservoir unterbrochen.

Nach entsprechender - automatischer oder manueller Kompensation der Abweichung kann mit dem Markieren fortgefahren werden.

Weitere Ausführungen zur Steuerung eines Markiergeräts bzw. der Komponenten eines Markiergeräts sind beispielsweise in der britischen Patentanmeldung mit der Anmeldenummer 0417517.0 zu finden, die am Prioritätsdatum des vorliegenden Textes veröffentlicht ist, und folglich dem Leser zur Verfügung steht, jedoch nicht zum Stand der Technik im Sinne von Art. 54(2) EPC gehört.

Das Feststellen der Abweichung kann - durch mechanische, optische oder akustische Mittel - angezeigt werden.

Selbstverständlich ist nicht nur das Feststellen der Abweichung anzeigbar, sondern ebenso die aktuelle Position und Orientierung des Auslasses. Die detektierten - und ggf. verarbeiteten - Werte können beispielsweise auf einem Monitor der Bedienperson dargestellt werden.

Der erfindungsgemässe Markierwagen und das erfindungsgemässe Verfahren werden nachfolgend anhand von in den Zeichnungen schematisch dargestellten Ausführungsbeispielen rein beispielhaft näher beschrieben. Im Einzelnen zeigen
Fig. 1A die Darstellung eines Markiervorgangs mit einem erfindungsgemässen Markierwagen beim Markieren eines Fussballfeldes,
Fig. 1B eine weitere Darstellung eines Markiervorgangs,
Fig. 2A eine - Leitstrahlen erzeugende - Lasersendeeinheit,
Fig. 2B schematisch eine Lasersendeeinheit, die durch Referenzsignale eine Referenzebene aufspannt und eine Ausbringungssteuereinheit zum Erfassen der Lage einer Ausbringungseinheit relativ zur Referenzebene,
Fig. 3A, 3B zwei Ausführungsformen erfindungsgemässer Markiergeräte,
Fig. 3C eine Anzeigevorrichtung mit drei Anzeigelampen und zwei Schaltern,
Fig. 3D, 3E zwei weitere Ausführungsformen erfindungsgemässer Markiergeräte,
Fig. 4A eine Ausführungsform einer Aktuatorvorrichtung mit optischem Detektor und Neigungssensor,
Fig. 4B eine weitere Ausführungsform einer Aktuatorvorrichtung,
Fig. 5 eine skizzenhafte Darstellung zur Erläuterung der Funktion der Ausbringungssteuereinheit,
Fig. 6A-6D vier Ausführungsformen von Strahlungssensoren einer Ausbringungssteuereinheit.

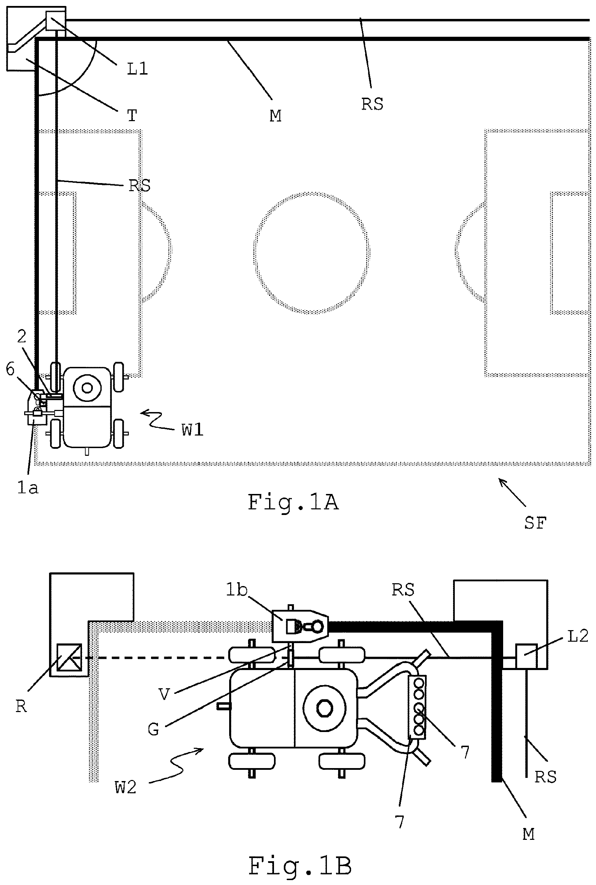

In Figur 1A ist ein Markiervorgang mit einem erfindungsgemässen mobilen Markierwagen W1 bildlich dargestellt. Gezeigt ist in Draufsicht ein zu markierendes Sportfeld SF - hier ein Fussballfeld - und der Markierwagen W1 beim Erzeugen bodengebundener Markierungen M. Die zu markierenden Linien sind angedeutet, fest durchgezogene Linien stellen bereits markierte Linien dar. Der Markierwagen W1 wird hier extern angesteuert, beispielsweise von einer mit dem Wagen kommunizierenden Recheneinheit.

Zum Bereitstellen eines Referenzsignals als "Führungssignal" für den Markierwagen W1 ist eine Lasersendeeinheit L1 mittels einer Trägerplatte T in einer Ecke des Feldes fix positioniert, welche Lasersendeeinheit L1 zwei fächerförmig aufgeweitete Leitstrahlen als elektromagnetische Referenzsignale RS, RS' bereitstellt. Die Lasersendeeinheit L1 umfasst einen Laser zur Emission von Laserstrahlung, einen Strahlaufweiter zur Erzeugung eines Strahlungsfächers und eine weitere optische Komponente - z.B. ein Pentaprisma - zum Aufspalten des Fächers in zwei Teilfächer. Die Sendeeinheit ist derart positioniert und ausgerichtet, dass die Leitstrahlen zwei auf die zu markierende Oberfläche - das Fussballfeld - vertikale Referenzebenen aufspannen, wobei die Referenzebenen zum Festlegen der Markierungslinien dienen - das Feld wird mittels der Sendeeinheit sozusagen optisch abgesteckt.

Der Markierwagen W1 weist eine Ausbringungseinheit 1a für Markiersubstanz auf, sowie ein - nicht dargestelltes Markiersubstanz-Reservoir. Durch einen Auslass der Ausbringungseinheit 1a wird die Substanz auf das Feld ausgelassen. Die Ausbildung der Ausbringungseinheit 1a ist derart, dass ihre Lage und damit die Lage des Auslasses definiert einstellbar ist. Die Einstellung erfolgt nach Anweisungen einer Ausbringungssteuereinheit.

Diese Ausbringungssteuereinheit umfasst einen Strahlungssensor 2 zum Empfang des jeweiligen Referenzsignals, sodass über die empfangene Signalposition auf dem Strahlungssensor 2 dessen relative Lage und daraus abgeleitet die Position des Markierwagens relativ zur entsprechenden Referenzebene feststellbar ist. Hierbei sind die Ausbringungssteuereinheit und der Strahlungssensor 2 auf dem Markierwagen W1 anbringbar und werden mit diesem und der Ausbringungseinheit 1a mitbewegt, so dass die Sensorfläche des Strahlungssensors 2 so bewegt wird, dass diese stets den Leitstrahl erfasst und sich an diesem entlang tastet. Weiters ist der Ausbringungssteuereinheit ein zweiachsiger Neigungssensor 6 zum Feststellen zweier Neigungswinkel der Ausbringungseinheit zugeordnet. Strahlungssensor 2 und Neigungssensor 6 sind mit der Ausbringungseinheit 1a fest verbunden. Damit kann aus einer Verknüpfung der Sensorsignale die Lage des Strahlungssensors 2 bzw. der zugeordneten Ausbringungseinheit relativ zur Referenzebene bestimmt werden. Bei Feststellen einer Abweichung von der durch die Referenzebene vorgegebenen Lage stellt die Ausbringungssteuereinheit entsprechende Steueranweisungen für die Ausbringungseinheit 1a bereit. Diese Steueranweisungen können gegebenenfalls ein Anhalten des Markiervorgangs bewirken. Insbesondere erfolgt über die Steueranweisungen aber eine Lagekorrektur der Ausbringungseinheit 1a. Damit ist ein schnelles und sehr genaues Markieren des Sportfeldes möglich.

In Figur 1B ist ein Markierfahrzeug W2 wiederum beim Erzeugen bodengebundener Markierungen M' dargestellt. Das Fahrzeug ist zum Führen durch eine Bedienperson ausgebildet. Weiters ist am Fahrzeug ein Anzeigemodul 7 mit mehreren Anzeigelampen 7' angeordnet. Drei Anzeigelampen 1' sind zur Anzeige der Position der Ausbringungseinheit 1b für Markiersubstanz relativ zu von einem Lasersender L2 emittierter Laserstrahlung ausgebildet, zwei Anzeigelampen 7' zur Anzeige der Orientierung der Ausbringungseinheit 1b relativ zur Laserstrahlung. Die Position gegenüber den Laserstrahlen wird mittels eines Laserempfängers erfasst, Werte zur Orientierungsbestimmung mittels eines Neigungsindikators. Laserempfänger und Neigungsindikator sind in einem gemeinsamen Gehäuse G untergebracht und auf einer Verbindungskomponente V zwischen Markierfahrzeug W2 und Ausbringungseinheit 1b angebracht.

Die Vorgabe der zu markierenden Linien erfolgt mittels des Lasersenders L2. Dieser ist wiederum in der Ecke eines Feldes angeordnet und legt anhand der in zwei Referenzsignale RS", RS"' aufgespaltenen Laserstrahlung zwei Referenzebenen fest. Die Strahlungsemission erfolgt unter einem vordefinierten Winkel - hier 90[deg.]. Weiters ist am dem Lasersender L2 gegenüberliegenden Ende des Feldes eine Reflektoreinheit R angeordnet. Die Reflektoreinheit R ist zum korrekten Ausrichten des Lasersenders L2 vor Beginn der Markierungsarbeiten verwendbar. Eine alternative bzw. zusätzliche Verwendungsmöglichkeit von Reflektoreinheiten stellt - mit entsprechender Ausbildung und Anordnung - der Einsatz derselben zum optischen "Abstecken" des gesamten Feldes dar. Mit ausrichtbaren Reflektoreinheiten können so verschiedenste Linien und/oder Flächen abgesteckt und mit einem Markiergerät abgefahren werden.

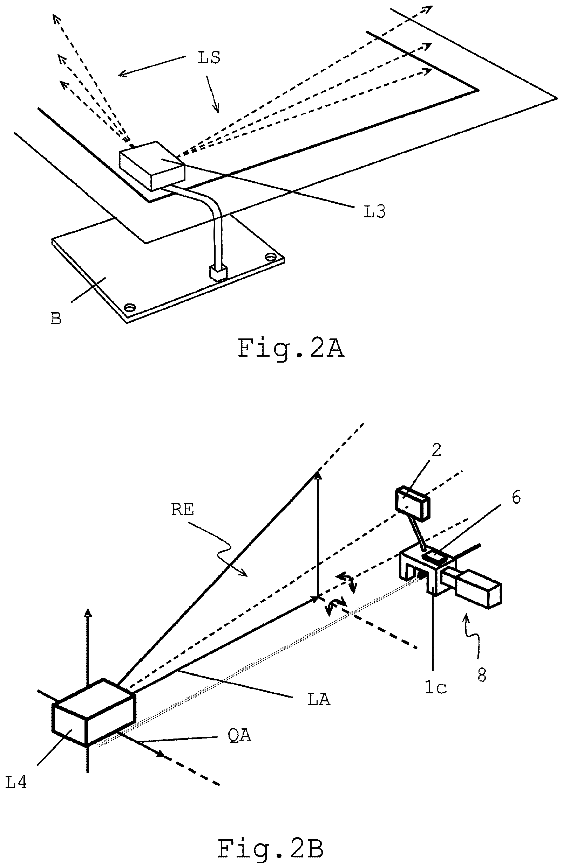

Die Führung des Markierfahrzeugs W2 erfolgt an den Referenzsignalen RS", RS"' und der optische Verbindung über den Laserempfänger - derselben zum Fahrzeug. Zur Markierung einer Linie muss das Markierfahrzeug W2 so geführt werden, dass der Laserempfänger die Signale empfangen kann. Die Markierungslinie und die durch das Signal festgelegte Linie bzw. Ebene sind aufgrund der versetzten Anordnung von Empfänger und Auslass nicht deckungsgleich. Anhand der Ausgaben von Laserempfänger und Neigungsindikator werden der Bedienperson Abweichungen der Lage der Ausbringungseinheit 1b von einer durch die Referenzebenen, welche Referenzebenen anhand der Referenzsignale RS", RS'" festgelegt sind, vorgegebenen Lage angezeigt. Die Bedienperson kann dann die entsprechenden Korrekturen durchführen, bzw. es können Korrekturen natürlich auch über eine automatische Steuerung erfolgen. Figur 2A zeigt die Darstellung einer Lasersendeeinheit L3 zur Erzeugung von Referenzstrahlen/Leitstrahlen LS als Referenzsignale. Mittels der Lasersendeeinheit L3 werden zwei - jeweils eine Referenzebene aufspannende - Leitstrahlenbündel unter einem vordefinierten Winkel - hier 90[deg.] - emittiert. Die Lasersendeeinheit L3 weist eine gegenüber der Markier-Oberfläche festlegbare Basisplatte B auf. Die Basisplatte B selbst kann zur Grobjustierung bezüglich der Oberfläche verstellbar ausgebildet sein. Auf der Basisplatte B ist eine Laserdiode, mit Strahlführungsmitteln zur Emission der Leitstrahlung verstellbar angeordnet. Die emittierte Strahlung weist einen asymmetrischen, hier elliptischen, Strahlquerschnitt auf.

In Figur 2B ist wiederum die Darstellung einer Sendeeinheit L4 bei der Emission elektromagnetischer Strahlung als Leitstrahlen gezeigt. Die Leitstrahlen legen eine fächerförmige Referenzebene RE fest. Mittel zum Erfassen der Orientierung der Ausbringungssteuereinheit leiten die Orientierung oder Stellung eines Laserdetektors 2' als Strahlungssensor relativ zur Referenzebene RE ab. Mittels einer Ausbringungssteuereinheit mit Laserdetektor 2' und Neigungssensor 6' wird somit über die Bestimmung der Lage des Laserdetektors 2' gegenüber der Referenzebene RE auch die relative Position einer Ausbringungseinheit 1c für Markiersubstanz sowie die Neigung um die Längs- und Querachse LA, QA der Ebene ermittelt. Entsprechend der festgestellten Relativlage der Ausbringungseinheit 1c werden von der Ausbringungssteuereinheit Steueranweisungen zur Lageeinstellung der Ausbringungseinheit 1c generiert, wobei die Lage anhand einer Aktuatorvorrichtung 8 entsprechend verstellbar ist.

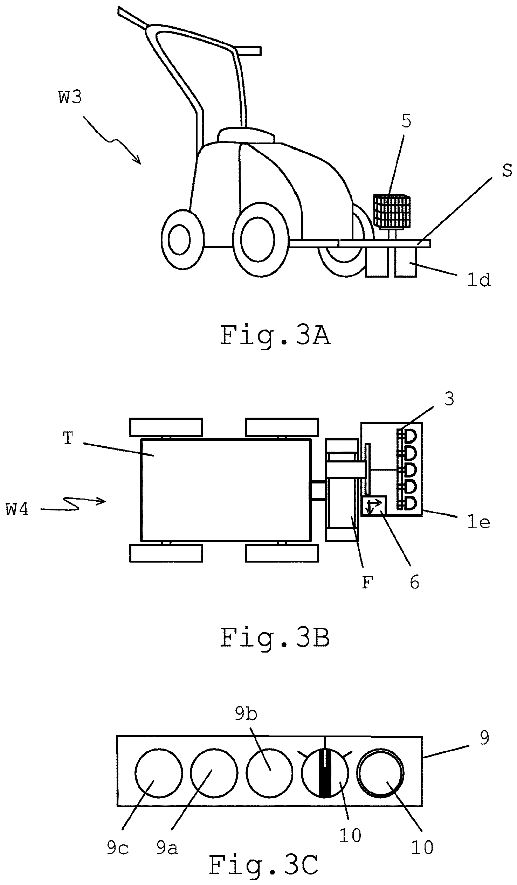

Figur 3A zeigt ein erstes Ausführungsbeispiel eines Markierwagens W3 mit vorderseitig am Wagen angeordneter Ausbringungseinheit 1d für Markiersubstanz, wobei die Anordnung lageverstellbar auf einer Schiene S am Wagen ausgeführt ist. Durch eine Öffnung der Ausbringungseinheit 1d wird die Substanz auf eine Bearbeitungsfläche ausgelassen. Mit der Ausbringungseinheit 1d ist ein Sensor für elektromagnetische Strahlung einer Ausbringungssteuereinheit fest verbunden. Als Sensor ist eine räumliche Anordnung von Lasersensoren 5 eingesetzt, mittels welcher räumlichen Anordnung von Sensoren ein Referenzsignal detektiert und die Lage der Ausbringungseinheit 1c relativ zu der durch das Referenzsignal definierten Referenzebene bestimmt werden kann. Festgestellte Lageabweichungen von der Referenzebene sind durch entsprechende Verstellung der Ausbringungseinheit 1d und damit der Öffnung kompensierbar. Die Verstellung umfasst dabei die Möglichkeiten der Verschiebung quer zur Fahrtrichtung sowie der Verkippung der Ausbringungseinheit 1d um eine Längs- und eine Querachse. Die Verstellungen zur Kompensation von Lageabweichungen sind anhand mechanischer Komponenten manuell oder anhand elektronischer Komponenten automatisiert durchführbar.

Figur 3B zeigt in Draufsicht ein zweites Ausführungsbeispiel eines Markierwagens W4 mit am Trägerwagen T vorderseitig angebrachter Ausbringungseinheit le. Der Wagen ist mit einer Ausbringungssteuereinheit ausgestattet. Handelsübliche "Basis-Fahrzeuge" können beispielsweise mit verstellbarer Ausbringungseinheit und Ausbringungssteuereinheit aufgerüstet werden. Der Ausbringungssteuereinheit sind ein Positions- und ein Neigungsmesser zugeordnet. Der Positionsmesser ist als lineare Anordnung von Photodioden 3 - Diodenzeile ausgebildet, der Neigungsmesser als schwerkraftgesteuerter zweiachsiger Neigungssensor 6'. Angeordnet sind Positions- und Neigungsmesser auf der Ausbringungseinheit le des Wagens. Eine Neigung derselben gegenüber einer festgelegten Referenzebene um eine Längsachse (Achse in Fahrtrichtung) und eine dazu senkrechte Querachse ist mittels des Neigungssensors 6' bestimmbar. Der Positionsmesser ermittelt wiederum die Position der Ausbringungseinheit gegenüber der Referenzebene. Von der Ausbringungssteuereinheit erfasste Abweichungen von - durch die Referenzebene definierten - Sollwerten für die Position und Orientierung der Ausbringungseinheit le werden kompensiert, indem die Ausbringungseinheit le in Position und Orientierung entsprechend verstellt wird. Eine seitliche Lateralbewegung der Einheit wird hierbei über eine Führung F am Markierwagen W4 ermöglicht, eine Winkeleinstellung der Einheit ist anhand einer nicht dargestellten Gelenk-Kopplung durchführbar. Wird ein - zuvor festgelegter - Grenzwert für die jeweilige Abweichung erreicht, erfolgen eine Erkennung mittels der Ausbringungssteuereinheit, sowie ein Steuerbefehl zum Anhalten des Markiervorgangs. Der Steuerbefehl kann - z.B. mit Hilfe entsprechender Elektronik - ein automatisches sofortiges Anhalten der Markierung, beispielsweise durch automatisches Anhalten einer Pumpe, bewirken, oder aber die Weitergabe der Information an eine Bedienperson, die dann die weiteren Massnahmen trifft.

In Figur 3C ist eine Anzeigevorrichtung 9 für ein Markiergerät dargestellt. Drei Anzeigelampen visualisieren Positionsstellungen der Ausbringungseinheit für Markiersubstanz des Geräts. Leuchtet die mittlere Lampe 9a - beispielsweise grün - so befindet sich die Ausbringungseinheit in der vorgesehenen Position. Das Aufleuchten der rechten oder linken Lampe 9b, 9c - z.B. gelb - indiziert eine Abweichung nach rechts oder links von der vorgesehenen Position. Für Einstellungen des Geräts ist der erste Schalter 10 vorgesehen - damit sind beispielsweise Funktionen wie automatischer Betrieb, Parkstellung oder Reinigungsstellung für das Gerät wählbar. Mit dem zweiten Schalter 10' ist eine Pumpe zum Transport der Markiersubstanz ein- und ausschaltbar. In dieser Ausführungsform ist eine Anzeigevorrichtung mit drei Positions-Anzeigelampen gezeigt. Vorzugsweise sind ebenfalls Indikatoren zum Anzeigen der Orientierung der Ausbringungseinheit auf einer Anzeigevorrichtung vorsehbar. Diese Ausführungsform der Anzeigevorrichtung 9 ist rein beispielhaft.

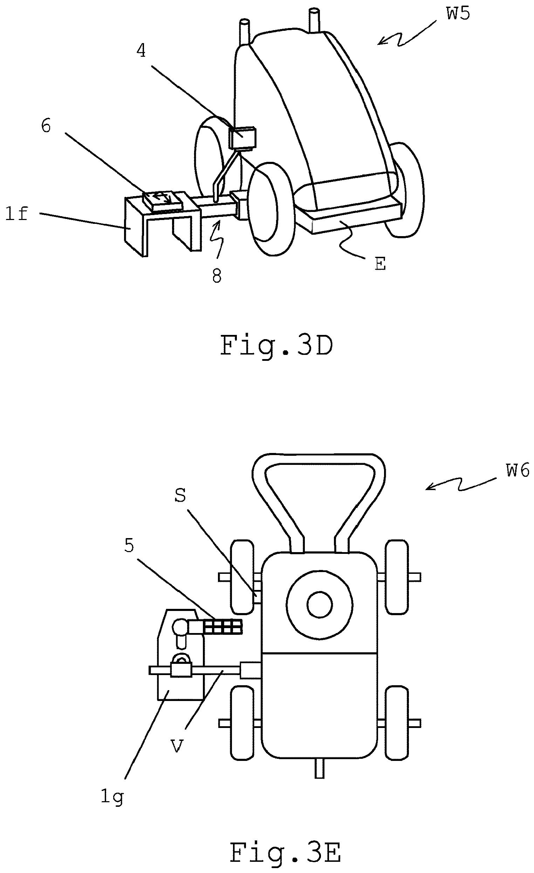

In Figur 3D dargestellt ist ein drittes Ausführungsbeispiel eines Markierwagens W5 mit seitlich am Wagen angeordneter Ausbringungseinheit 1f und Ausbringungssteuereinheit. Ausbringungseinheit 1f und -Steuereinheit sind so ausgebildet, dass sie einfach an den Wagen anschliessbar sind. So können diese Teile auch als Module für handelsübliche Geräte bereitgestellt werden. Die Ausbringungssteuereinheit weist folgende Komponenten auf: einen CCD-Flächenarray 4 als optischen Detektor und einen Neigungssensor 6", welche mit der Ausbringungseinheit 1f verbunden sind, eine Aktuatorvorrichtung 8' zur Lageeinstellung der Ausbringungseinheit 1f, sowie ein Gehäuse mit einer Elektronik E zur Verarbeitung der Detektor/Sensorausgaben und Bereitstellung von Anweisungen zur Steuerung der Lageeinstellung der Ausbringungseinheit lf. Der Neigungssensor 6" ist direkt über dem Auslass der Ausbringungseinheit 1f angeordnet. CCD-Flächenarray 4 und Neigungssensor 6" dienen - analog zu obigen Ausführungen - der Relativlage-Bestimmung. Mittels der Elektronik werden erfasste Lagewerte in Bezug auf Referenzwerte ausgewertet und gegebenenfalls Kompensationswerte ermittelt und bereitgestellt. Im Falle von Abweichungen der Lagewerte von den Referenzwerten erfolgt über die Elektronik E und die Aktuatorvorrichtung 8' eine Lageveränderung der Ausbringungseinheit 1f anhand der Kompensationswerte. Gegebenenfalls erfolgt auch ein Anhalten - und Wiederaufnehmen - des Markiervorgangs. Mit dem Ausrichten des Markierwagens W5 beim Markieren von Oberflächen an einer vordefinierten Referenzebene ist somit der Markiervorgang mit hoher Genauigkeit automatisiert durchführbar.

Der als drittes Ausführungsbeispiel in Figur 3E dargestellte Markierwagen W6 aus Figur 3E weist ebenfalls einen seitlichen Auslass für Markiersubstanz auf. Mit dem möglichst nahe am Auslass angeordneten dreidimensionalen CCD 5' sind Positions- und Orientierungs-Parameter gegenüber einer optischen Referenzebene bestimmbar. Vorteilhaft kann für eine derartige Ausführung des Markierwagens W6 eine geneigte Ebene als Referenzebene bereitgestellt werden. Der Auslass ist über ein schieb- und kippbar gelagertes Verbindungselement V der Ausbringungseinheit 1g lageverstellbar. Der Markierwagen W6 ist weiters mit einem Radsensor S zur Bereitstellung von Messwerten zur Kontrolle und Steuerung der Fahrgeschwindigkeit ausgestattet.

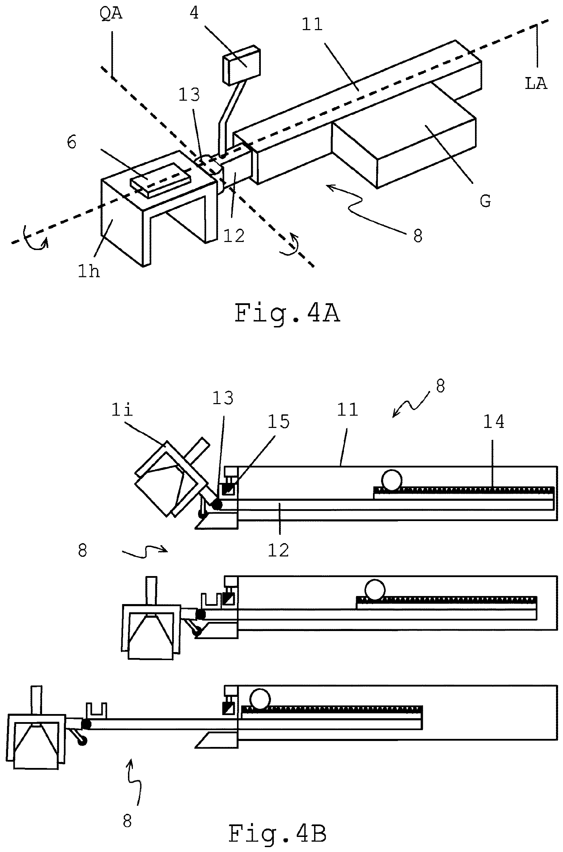

Figur 4A zeigt die Darstellung gekoppelter Komponenten einer Ausbringungssteuereinheit. Eine Ausbringungseinheit 1h für Markiersubstanz ist mittels einer Aktuatorvorrichtung 8" lageverstellbar ausgeführt. Die Aktuatorvorrichtung 8" umfasst ein Vierkantrohr 11 und eine im Vierkantrohr 11 gelagerte Linearachse 12, wobei die Linearachse 12 über einen Motor seitlich verschiebbar ist. Der Motor ist in einem Gehäuse G' untergebracht, in welchem sich ausserdem noch mehrere elektronische Komponenten befinden. Weiters umfasst die Aktuatorvorrichtung 8" eine gelenkige Kopplung 13, welche eine definierte Einstellung der Ausbringungseinheit um eine Längs- und Querachse LA', QA' ermöglicht. Eine - hier auf der Linearachse 12 angeordnete - zweidimensionale Anordnung photosensitiver Bereiche 4' als Strahlungsdetektor stellt ein Signal bezüglich einer Relativposition der mit der Linearachse 12 fest verbundenen Ausbringungseinheit 1h bereit. Mittels eines auf der Ausbringungseinheit 1h angebrachten Neigungssensors 6'" ist eine Relativ-Orientierung der Ausbringungseinheit 1h feststellbar. Mittels der elektronischen Komponenten der Ausbringungssteuereinheit werden die erfassten Positions- und Orientierungssignale verarbeitet und entsprechende Steueranweisungen aus oder weitergegeben. So wird bei Feststellen von Abweichungen der Ausbringungseinheit 1h aus einer vorgegebenen Lage die Aktuatorvorrichtung 8" derart gesteuert, dass die Lageabweichungen kompensiert werden.

In Figur 4B ist ein Schnitt durch eine Ausbringungseinheit 1i mit Aktuatorvorrichtung 8'" dargestellt. In einem Vierkantrohr 11' der Aktuatorvorrichtung 8'" befindet sich ein Längslager 14 mit ZahnstangenAntrieb. Mittels des Zahnstangen-Antriebs ist eine Linearachse 12' der Aktuatorvorrichtung 8'" verschiebbar. Ein Gelenk 13' mit zwei rotatorischen Freiheitsgraden ermöglicht die Orientierungseinstellung der Ausbringungseinheit li. Weiters weist die Aktuatorvorrichtung 8'" hier ein Element 15 zum Halten der Ausbringungseinheit 1i in einer Parkposition. In der obersten Ansicht befindet sich die Ausbringungseinheit 1i mittels des Elements in der Parkposition. In der mittleren Ansicht ist die Ausbringungseinheit 1i in aktiver Stellung zum Markieren dargestellt. Die unterste Ansicht zeigt Linearachse 12' und Ausbringungseinheit 1i in ausgefahrener Stellung, die beispielsweise zur Kompensation einer festgestellten Abweichung von einer vorgegebenen Position eingenommen wird.

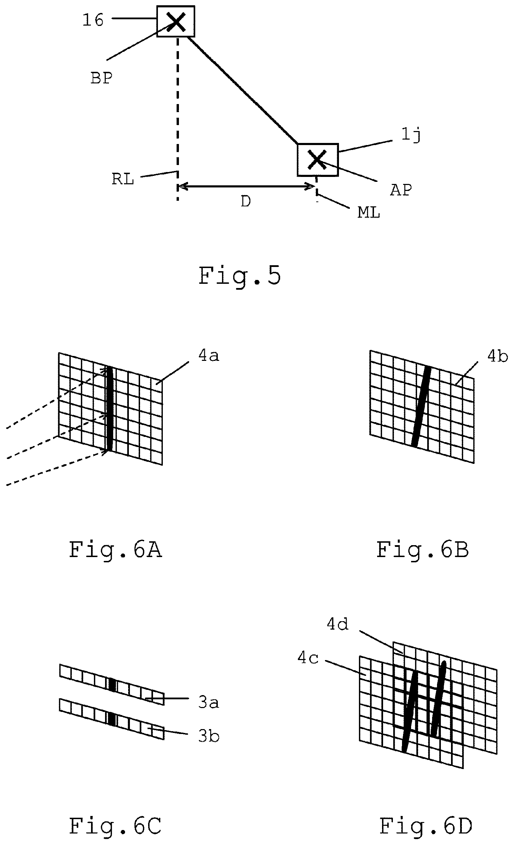

Figur 5 zeigt eine skizzenhafte Darstellung geometrischer Beziehungen zwischen einer Detektoreinheit 16, einer Ausbringungseinheit 1j, Referenzlinie RL und Markierlinie ML, wobei zur Funktion der jeweiligen Elemente auf die obigen Ausführungen verwiesen wird. Durch eine definierte geometrische Anordnung ist die relative Lage von Detektoreinheit 16 und Ausbringungseinheit 1j bekannt. Die Detektoreinheit 16 ist hier zur Positions- und Orientierungsbestimmung der Ausbringungseinheit 1j ausgebildet. Eine - nicht dargestellte - Sendeeinheit legt indirekt die mittels der Ausbringungseinheit 1j zu markierende Markierlinie ML fest, indem durch - von der Sendeeinheit - emittierte Strahlung eine Referenzlinie RL in einer Distanz D von der gewünschten Markierungslinie ML erzeugt wird. Trifft die Strahlung die Detektoreinheit 16 im Wesentlichen senkrecht in einem Bezugspunkt BP, so sind Detektoreinheit 16 und Ausbringungseinheit 1j korrekt positioniert und ausgerichtet und ein Auslasspunkt AP der Ausbringungseinheit 1j befindet sich exakt - senkrecht - über der Markierlinie ML. Der Abstand zwischen einer Projektion des Bezugspunktes BP und einer Projektion des Auslasspunktes AP auf die zu markierende Oberfläche entspricht dann der Distanz D. Der Abstand der projizierten Punkte entspricht jedoch nicht mehr der Distanz D, wenn sich die Orientierung der Detektoreinheit 16 - und der Ausbringungseinheit 1j - gegenüber der Referenzlinie RL verändert, was eine Nicht-Übereinstimmung des projizierten Auslasspunktes AP mit der Markierlinie ML - also eine fehlerhafte Markierung - impliziert. Zur Kompensation von Änderungen des Projektionsabstandes werden anhand der mittels der Detektoreinheit 16 festgestellten Abweichungen Kompensationswerte, beispielsweise zur Winkelkompensation, ermittelt. Ebenso werden bei Positionsabweichungen des Bezugspunktes BP von der Referenzlinie RL - die sich bemerkbar machen, indem die Strahlung nicht mehr den Bezugspunkt BP trifft, Kompensationswerte bereitgestellt.

Die Figuren 6A bis 6D zeigen vier Ausführungsbeispiele von Strahlungssensoren einer Ausbringungssteuereinheit, wobei die schwarzen Flächen jeweils ein auf dem jeweiligen Strahlungssensor abgebildetes Referenzsignal darstellen. Die jeweiligen Abbildungen geben ein der Grosse bzw. der Form sowie der Intensität des abgebildeten Referenzsignals entsprechendes Signal ab.

Im ersten Ausführungsbeispiel aus Figur 6A ist der Strahlungssensor als CCD-Flächensensor 4a ausgebildet. Anhand der Abbildung eines mittels elektromagnetischer Strahlung erzeugten Referenzsignals auf dem CCD-Flächensensor 4a ist erkennbar, dass die Sensorfläche senkrecht auf das zentrische Referenzsignal ausgerichtet ist.

In Figur 6B dagegen ist in einem zweiten Ausführungsbeispiel die Referenzsignal-Abbildung auf dem als CCD-Sensor 4b ausgebildeten Strahlungssensors aus ihrer zentrischen Lage gewandert, die Sensorfläche ist also gegen die Referenzsignal-Achse geneigt. Eine solche Abbildung des Signals wird beispielsweise dann erhalten, wenn der Sensor bzw. die Ausbringungssteuereinheit - in Referenz zu den obigen Ausführungen - quer zur Fahrtrichtung geneigt ist.

Figur 6C zeigt den Strahlungssensor in einem dritten Ausführungsbeispiel als Anordnung zweier CCD-Zeilensensoren 3a, 3b. Das Bild des Referenzsignals deutet auf eine korrekte Relativlage von Strahlungssensor und Referenzsignal hin.

Das vierte Ausführungsbeispiel aus Figur 6D stellt einen als Anordnung zweier matrizenförmiger CCD's 4c, 4d ausgebildeten Strahlungsdetektor dar. Die beiden CCD's 4c, 4d sind mit einem Zwischenraum in zwei Ebenen angeordnet. Mit einer derartigen räumlichen Anordnung ist sowohl eine Neigung der CCD's 4c, 4d - und der Ausbringungssteuereinheit - quer zur Fahrtrichtung als auch in Fahrtrichtung erfassbar. Die Grosse der Neigung ist beispielsweise anhand von Parametern wie Lichtintensität oder Exzentrizität der Position der Abbildung auf den CCD's 4c, 4d ermittelbar. Ebenso ist es möglich, die Neigung anhand einer zuvor vorgängig durchgeführten Kalibrierung zu bestimmen.

## Patentansprüche

1. Ein Markierwagen, welcher
eine Ausbringungseinheit (1a, 1b, 1c, 1d, 1e, 1f, 1g, 1h, 1i, 1j) mit einem Auslass für Markiersubstanz zur Erzeugung einer bodengebundenen Markierung (M,M'), insbesondere eines Sportfeldes (SF), entlang einer gewünschten Markierungslinie,
eine Pumpeinrichtung zum Transportieren der Markiersubstanz zum Auslass, und
eine Ausbringungssteuereinheit zur Bereitstellung von Steueranweisungen für die Ausbringungseinheit (1a, 1b, 1c, 1d, 1e, 1f, 1g, 1h, 1i, 1j) aufweist,
**dadurch gekennzeichnet, dass**
der Markierwagen eine Aktuatorvorrichtung zur definierten Verschiebung des Auslasses, anhand der genannten Steueranweisungen, quer zur Fahrtrichtung des Markierwagens aufweist, wobei Abweichungen der Querposition des Auslasses von der gewünschten Markierungelinie durch die genannte definierte Veschiebung fortlaufend korrigierbar sind.

2. Markierwagen gemäss Anspruch 1, welcher derart konfiguriert ist, dass er von einer Bedienperson steuerbar ist.

3. Markierwagen gemäss einem der Ansprüche 1 oder 2, welcher derart konfiguriert ist, dass er geschoben von einer Bedienperson fahrbar ist.

4. Markierwagen gemäss einem der Ansprüche 1 bis 3, welcher einen Strahlungssensor (2) zum Empfang eines elektromagnetischen Referenzsignals (RS, RS', RS", RS"') aufweist, wobei die Ausbringungssteuereinheit derart ausgebildet ist, dass die Steueranweisungen anhand des empfangenen Referenzsignals (RS, RS', RS", RS"') der Ausbringungseinheit (1a, 1b, 1c, 1d, 1e, 1f, 1g, 1h, 1i, 1j)) bereitstellbar sind.

5. Markierwagen gemäss Anspruch 4, wobei der Strahlungssensor (2) derart ausgebildet ist, dass anhand des empfangenen Referenzsignals (RS, RS', RS", RS"') die Position der Ausbringungseinheit (1a, 1b, 1c, 1d, 1e, 1f, 1g, 1h, 1i, 1j) relativ zu einer mittels des Referenzsignals (RS, RS', RS", RS"') festgelegten Referenzebene (RE) ableitbar ist.

6. Markierwagen gemäss Anspruch 5, welcher Mittel zum Erfassen der Orientierung der Ausbringungssteuereinheit relativ zur Referenzebene (RE) aufweist, wobei mittels der Ausbringungssteuereinheit
- die Lage der Ausbringungseinheit (1a, 1b, 1c, 1d, 1e, 1f, 1g, 1h, 1i, 1j) relativ zur Referenzebene (RE) feststellbar ist, und
- Steueranweisungen für die Ausbringungseinheit (1a, 1b, 1c, 1d, 1e, 1f, 1g, 1h, 1i, 1j) zur Lagekorrektur bereitstellbar sind.

7. Markierwagen gemäss Anspruch 6, wobei der Strahlungssensor als die Mittel zum Erfassen der Orientierung ausgebildet ist.

8. Markierwagen gemäss einem der vorhergehenden Ansprüche, wobei die Ausbringungssteuereinheit derart konfiguriert ist, dass bei einem Erreichen eines zuvor festgelegten Grenzwertes einer Querverschiebung bzw. einer Winkeleinstellung der Ausbringungseinheit, ein automatisches Anhalten der Markierung, insbesondere durch automatisches Anhalten der Pumpeinrichtung, ausführbar ist.

9. Markierwagen gemäss einem der vorhergehenden Ansprüche, wobei die Aktuatorvorrichtung (8"') ein Element (15) zum Halten der Ausbringungseinheit (li) in einer Parkposition aufweist.

10. Markierwagen gemäss einem der vorhergehenden Ansprüche, welcher einen Schalter für Einstellungen des Markierwagens aufweist, mittels welchem Schalter einen automatischer Betrieb, eine Parkstellung oder eine Reinigungsstellung wählbar sind.

11. Markierwagen gemäss einem der vorhergehenden Ansprüche, welcher derart konfiguriert ist, dass ein Steuerprogramm, welches eine Mehrzahl verschiedener Eingabeparameter berücksichtigt, einsetzbar ist.

12. Verfahren zur Erzeugung einer bodengebundenen Markierung, insbesondere eines Sportfeldes (SF), anhand eines Markiergeräts, **dadurch gekennzeichnet, dass**
- das Markiergerät ein Markierwagen gemäss einem der Ansprüche 1 bis 11 ist, und
- die Aktuatorvorrichtung verschiebt den Auslass quer zur Fahrtrichtung des Markierwagens anhand der von der Ausbringungssteuereinheit bereitgestellten Steueranweisungen.

13. Verfahren gemäss Anspruch 12, wobei der Markierwagen von einer Bedienperson gesteuert und/oder geschoben wird.

14. Markierverfahren gemäss einem der Ansprüche 12 oder 13, wobei der Markierwagen ein Markierwagen gemäss einem der Ansprüche 4 bis 11 ist, und wobei die Ausbringungssteuereinheit die Steueranweisungen anhand des empfangenen elektromagnetischen Referenzsignals bereitstellt.

15. Markierverfahren gemäss einem der Ansprüche 12 bis 14, wobei die Markiersubstanz während des Markiervorgangs durch die Pumpeinrichtung zum Auslass transportiert wird.
